# DEMANDE DE BREVET EUROPEEN

(11) **EP 2 505 392 A1**
(43) Date de publication de la demande: **03.10.2012**
(21) Numéro de dépôt: 12162444.9
(22) Date de dépôt: 30.03.2012
(51) Int. Cl.: B60G 15/06, F16C 19/10, F16C 33/76, F16C 33/78, F16C 33/80

(54) **Butée de suspension a étanchéité renforcée**

(30) Priorité: 30.03.2011 FR 1100941
(71) Demandeur: NTN-SNR Roulements, 74000 Annecy (FR)
(72) Inventeur: Chamousset, Antony, 74150 Sales (FR)
(74) Mandataire: Novagraaf Technologies

(57) **Abrégé**

L'invention se rapporte à un dispositif de butée de suspension (10) pour une jambe de suspension d'un véhicule, la jambe étant pourvue d'un ressort à boudin. Ce dispositif comporte un palier de butée (14) définissant un axe de rotation (100) du dispositif et pourvu d'une rondelle métallique inférieure (20) tournant par rapport à une rondelle métallique supérieure (22) ; une pièce d'appui (16) en matière synthétique pour transmettre à la rondelle inférieure (20) des efforts exercés par le ressort (12), la pièce d'appui (16) comportant une zone d'appui de la rondelle inférieure ; un couvercle (18) recouvrant la rondelle supérieure (22) et délimitant avec la pièce d'appui (16) un logement (15) pour le palier, le couvercle (18) étant pourvu d'une jupe (40) recouvrant sans contact une zone périphérique (32) de la pièce d'appui (16) et délimitant avec la zone périphérique (32) de la pièce d'appui un labyrinthe annulaire (42), disposé radialement à l'extérieur du logement (15) et reliant le logement à l'extérieur; et un déflecteur annulaire (52) délimitant avec la jupe (40) du couvercle au moins une ouverture supérieure (56) et avec la pièce d'appui (16) au moins une ouverture inférieure (54), les ouvertures supérieure et inférieure constituant des voies d'entrées supérieure et inférieure depuis l'extérieur dans un même tronçon d'entrée (44) du labyrinthe.

## Description

### DOMAINE TECHNIQUE DE L'INVENTION

L'invention se rapporte à une butée de suspension pour une jambe de suspension de véhicule, notamment pour une jambe de suspension télescopique de roue directrice de véhicule automobile, pourvue d'un palier et de moyens de protection de ce palier.

### ETAT DE LA TECHNIQUE ANTERIEURE

Traditionnellement, les paliers de butée de suspension sont logés dans des boîtiers en deux parties, fermés par des lèvres d'étanchéité fixées à l'une des parties du boîtier et glissant sur l'autre partie du boîtier, comme illustré dans le document EP 1 000 781. Cette technologie a le désavantage d'induire un couple de glissement entre les parties tournantes, dit couple de traînée, qui est particulièrement nuisible dans les applications à des roue directrices.

Pour éliminer ce couple de traînée, il a été proposé de remplacer les garnitures d'étanchéité traditionnelles par des dispositifs à chicane sans contact, c'est-à-dire des dispositifs dont les éléments tournants sont imbriqués les uns dans les autres, sans contact de manière à créer une perte de charge importante entre l'extérieur et le logement du palier. Un premier exemple de ce type de technologie est offert par le document FR 2 857 906, qui décrit une butée de suspension pour une jambe de suspension à ressort à boudin, comportant un palier de butée définissant un axe de rotation du dispositif et pourvu d'une rondelle métallique inférieure tournant par rapport à une rondelle métallique supérieure. Une pièce d'appui en matière synthétique est disposée entre le ressort à boudin et le palier, pour transmettre à la rondelle inférieure les efforts exercés par le ressort. Un couvercle recouvre la rondelle supérieure et délimite avec la pièce d'appui un logement pour le palier. Le couvercle est pourvu d'une jupe cylindrique recouvrant sans contact une zone périphérique cylindrique de la pièce d'appui et délimitant une perte de charge entre le logement et l'extérieur. La structure simple de la perte de charge permet de s'accommoder de mouvements relatifs entre le couvercle et la pièce d'appui, mouvement qui sont dus notamment à la faible rigidité des rondelles du palier. Toutefois, les remontées de liquide par capillarité ne sont pas exclues et l'étanchéité n'est pas de bonne qualité.

Pour permettre, sans frottement et sans augmenter significativement l'encombrement axial et radial, d'assurer une étanchéité de bonne qualité entre les éléments tournant d'une butée de suspension, il a été proposé dans le document FR2901179 un dispositif de butée de suspension pour une jambe de suspension d'un véhicule, la jambe étant pourvue d'un ressort à boudin, le dispositif comportant : un palier de butée rigide définissant un axe de rotation du dispositif et pourvu d'une rondelle métallique inférieure tournant par rapport à une rondelle métallique supérieure ; une pièce d'appui en matière synthétique pour transmettre à la rondelle inférieure les efforts exercés par le ressort, la pièce intermédiaire d'appui comportant une zone d'appui annulaire de la rondelle inférieure ; et un couvercle recouvrant la rondelle supérieure et délimitant avec la pièce d'appui un logement pour le palier, le couvercle étant pourvu d'une jupe recouvrant sans contact une zone périphérique de la pièce d'appui et délimitant avec la zone périphérique de la pièce d'appui un labyrinthe annulaire, disposé radialement à l'extérieur du logement et reliant le logement à l'extérieur, le labyrinthe annulaire comportant successivement, de l'intérieur vers l'extérieur du logement, une première perte de charge annulaire de jeu radial J1, une deuxième perte de charge annulaire de jeu axial J2, et une troisième perte de charge annulaire de jeu radial J3. La rigidité du palier permet de réaliser des jeux relativement faibles, sans risque de frottement au niveau du labyrinthe.

Une autre solution explorée dans le document WO2009/019340 pour à la fois éviter les risques de frottements non maîtrisés au niveau du labyrinthe en cas de déformation des pièces et le frottement excessif d'un lèvre d'étanchéité périphérique, consiste à disposer un élément d'étanchéité dans l'espace entre couvercle et appui ressort, dimensionné pour être en contact frottant d'une part avec le couvercle et d'autre part avec l'appui ressort, ledit élément d'étanchéité étant monté mobile par rapport au moins à l'appui ressort ou au couvercle.

Toutefois, les nouvelles pratiques en matière de lavage des véhicules, et notamment les lavages de dessous de caisse au jet d'eau sous haute pression repoussent les exigences en matière de protection des paliers de butées de suspension.

### EXPOSE DE L'INVENTION

L'invention vise à remédier à tout ou partie des inconvénients de l'état de la technique identifiés ci-dessus, et notamment à proposer un dispositif de butée de suspension empêchant les entrées d'eau sous pression projetée par une buse de nettoyage.

Pour ce faire est proposé selon un premier aspect de l'invention un dispositif de butée de suspension pour une jambe de suspension d'un véhicule, la jambe étant pourvue d'un ressort à boudin, le dispositif comportant :
- un palier de butée définissant un axe de rotation du dispositif et pourvu d'une rondelle métallique inférieure tournant par rapport à une rondelle métallique supérieure ;
- une pièce d'appui en matière synthétique pour transmettre à la rondelle inférieure les efforts exercés par le ressort, la pièce d'appui comportant une zone d'appui de la rondelle inférieure ; et
- un couvercle recouvrant la rondelle supérieure et délimitant avec la pièce d'appui un logement pour le palier, le couvercle délimitant avec la pièce d'appui un labyrinthe annulaire reliant le logement à l'extérieur, et
- un déflecteur annulaire délimitant avec le couvercle au moins une ouverture annulaire supérieure et avec la pièce d'appui au moins une ouverture inférieure, les ouvertures supérieure et inférieure constituant des voies d'entrées supérieure et inférieure depuis l'extérieur dans un même tronçon d'entrée du labyrinthe.

La présence d'au moins deux ouvertures permet que l'une d'entre elles serve de dérivation en cas de projection sous haute pression d'un fluide de nettoyage par l'autre. Plus spécifiquement, un jet d'eau pressurisée entrant par l'ouverture inférieure sera évacué au moins partiellement par l'ouverture supérieure, et la pression au niveau du tronçon d'entrée dans le labyrinthe restera maîtrisée, évitant une remontée d'eau dans le palier.

Préférentiellement, le déflecteur est disposé de telle sorte qu'un rayon lumineux entrant par l'ouverture inférieure sorte par l'ouverture supérieure et sans réflexion et sans pénétrer dans le tronçon d'entrée du labyrinthe. On minimise ainsi la montée en pression dans le tronçon d'entrée.

Préférentiellement, le labyrinthe comporte en outre au moins un deuxième tronçon reliant le premier tronçon au palier.

Suivant une disposition géométrique particulièrement avantageuse, le tronçon d'entrée dans le labyrinthe s'étend depuis le déflecteur radialement vers l'intérieur, c'est-à-dire vers l'axe de rotation. Ce tronçon d'entrée peut être essentiellement radial ou présenter une certaine inclinaison lui conférant une forme généralement tronconique pointant vers le palier. Cette dernière disposition favorise l'évacuation d'eau. Préférentiellement, le labyrinthe présente un deuxième tronçon du labyrinthe reliant le tronçon d'entrée au palier. Préférentiellement, le tronçon d'entrée est relié au deuxième tronçon du labyrinthe par une ouverture annulaire axiale, délimitée entre la pièce d'appui et le couvercle. Suivant un mode de réalisation particulièrement avantageux, le tronçon d'entrée s'étend radialement vers l'intérieur jusqu'à une gorge annulaire, l'ouverture annulaire axiale reliant le tronçon d'entrée au deuxième tronçon étant située radialement à l'extérieur de la gorge annulaire. La gorge annulaire constitue ainsi une chambre destinée à limiter la pression au niveau de l'ouverture annulaire axiale.

Suivant un mode de réalisation, le dispositif comporte en outre un joint d'étanchéité par contact glissant disposé dans le labyrinthe. Ce joint d'étanchéité peut être disposé dans le deuxième tronçon. Suivant un mode de réalisation, préféré, ce joint d'étanchéité est apte à glisser sur une surface de glissement de la pièce d'appui inférieure et sur une surface de glissement du couvercle.

Le déflecteur peut être une partie constituante du couvercle ou de la pièce d'appui, ou bien être rapporté sur le couvercle ou la pièce d'appui.

Dans le cas d'un déflecteur intégré ou fixé au couvercle, l'ouverture inférieure est de préférence annulaire et fait de préférence face à une pluralité d'ouvertures supérieures disposées sur la circonférence du couvercle et séparées deux à deux par des pontets de liaison entre le déflecteur et le couvercle.

Suivant un mode de réalisation préféré, le labyrinthe est disposé radialement à l'extérieur du logement. Plus généralement, le labyrinthe et le déflecteur sont situés radialement à l'extérieur des rondelles du palier de butée. C'est dans ce cas une protection périphérique extérieure que l'on obtient. En pratique, le couvercle présente une jupe recouvrant sans contact une zone périphérique de la pièce d'appui et définissant avec la zone périphérique le labyrinthe.

Alternativement, on peut prévoir le déflecteur pour protéger un labyrinthe périphérique intérieur, situé radialement à l'intérieur du logement du palier de butée.

Naturellement, une option n'est pas exclusive de l'autre et l'on peut prévoir deux déflecteurs tels que décrits précédemment, l'un pour protéger un labyrinthe extérieur et l'autre un labyrinthe intérieur.

Suivant un autre aspect de l'invention, celle-ci a trait à une méthode pour réduire ou empêcher une injection d'eau dans un dispositif de butée de suspension, consistant à prévoir deux ouvertures annulaires reliant en parallèle à l'extérieur un tronçon d'entrée dans un labyrinthe situé entre une pièce d'appui inférieure et un couvercle de logement d'un palier du dispositif de butée de suspension.

### BREVE DESCRIPTION DES FIGURES

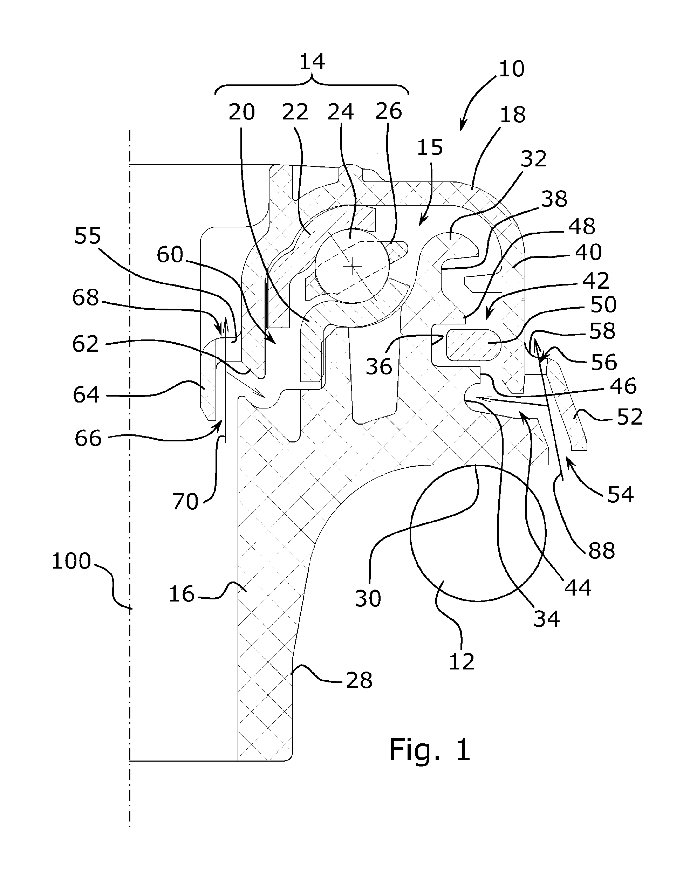

D'autres caractéristiques et avantages de l'invention ressortiront à la lecture de la description qui suit, en référence à la figure 1, qui illustre un dispositif de butée de suspension selon un mode de réalisation préféré.

### DESCRIPTION DETAILLEE D'UN MODE DE REALISATION

Sur la figure 1 est représenté un dispositif de butée de suspension **10** destiné à constituer une interface pivotante entre une spire supérieure d'un ressort à boudin **12** et la caisse d'un véhicule. Ce dispositif de butée **10** comporte un palier **14** assurant la liaison pivotante autour d'un axe **100,** ce palier **14** étant logé dans une cavité annulaire **15** entre une pièce d'appui inférieur **16** sous laquelle vient prendre appui la spire supérieure du ressort **12,** et un couvercle de protection **18.** Le cas échéant, des blocs filtrants (non représentés) peuvent être prévu entre la spire supérieure du ressort et la pièce d'appui, et/ou au dessus du couvercle. Le couvercle **18** est conformé pour se loger soit directement dans une cavité prévue à cet effet dans la caisse, soit sur une plaque d'interface de fixation à la caisse. Dans l'exemple considéré, le palier **14** est un palier à roulement constitué d'une rondelle inférieure **20** et d'une rondelle supérieure **22** formant des chemins de roulement pour des corps roulants **24** qui sont par ailleurs guidés par une cage de guidage **26.** La rondelle inférieure **20** repose sur des reliefs de la pièce d'appui inférieur **16** prévus à cet effet, alors que la rondelle supérieure est logée dans le couvercle **18.**

La pièce d'appui **16** comporte, du côté opposé au palier, une jupe cylindrique **28** de guidage du ressort, et un épaulement transversal **30** d'appui du ressort **12.** Entre l'épaulement **30** et le ressort **12** peut être interposée l'extrémité annulaire d'une manchette en accordéon (non représentée) destinée à la protection de l'amortisseur contre les pollutions extérieures, cette extrémité de la manchette formant le cas échéant un filtre mécanique entre le ressort et la pièce d'appui inférieur **16,** permettant notamment de limiter la transmission à la caisse du véhicule des bruits de roulement de la roue. La pièce d'appui **16** comporte en outre une paroi annulaire **32** située radialement à l'extérieur du palier **14** et se projetant vers le couvercle **18,** cette paroi **32** présentant plusieurs gorges annulaires, **34, 36, 38,** ici au nombre de trois, ouvertes radialement vers le couvercle **18.**

Le couvercle **18** présente une jupe extérieure **40** disposée en regard de cette paroi annulaire **32.** Le couvercle **18** et la pièce d'appui **16** sont agencés de manière à ne pas venir en contact direct l'un avec l'autre et à former entre eux un passage annulaire en labyrinthe **42,** tirant profit des gorges annulaires **34, 36, 38** de la paroi annulaire **32** de la pièce d'appui **16.** Dans cet exemple de réalisation, le labyrinthe **42** est constitué d'un tronçon d'entrée annulaire **44** essentiellement radial présentant un fond formé par la gorge annulaire **34,** d'un deuxième tronçon au niveau de la gorge annulaire formant une chambre reliée au tronçon d'entrée **44** par une ouverture annulaire axiale **46** de faible largeur, et d'un troisième tronçon formé au niveau de la gorge annulaire **38,** reliée au deuxième tronçon par une ouverture annulaire de faible largeur **48.**

Un joint d'étanchéité mobile **50** est logé dans la chambre **36** du deuxième tronçon. Le joint **50** est en appui radial glissant contre la jupe **40** du couvercle et est dimensionné de façon à présenter avec la pièce d'appui **16** un jeu fonctionnel axial et radial. Lors de sollicitations mécaniques importante induisant des déformations ou des déplacements relatifs entre la pièce d'appui **16** et le couvercle **18,** le joint d'étanchéité **50** est susceptible d'entrer en contact avec une paroi de la pièce d'appui **16,** mais cet éventuel double contact glissant avec la pièce d'appui **16** et le couvercle **18** ne génère qu'un très faible couple de frottement.

Par ailleurs, le joint **50** peut être amené à ce déplacer axialement pour refermer le passage **48** entre le deuxième et le troisième tronçon, s'il subit une pression importante.

Le couvercle **18** est par ailleurs pourvu d'un déflecteur **52** qui vient protéger le tronçon d'entrée **44** du labyrinthe. Ce déflecteur est constitué d'une paroi annulaire disposée radialement à l'extérieur et en regard du tronçon d'entrée **44,** empêchant un accès directe en ligne droite à ce tronçon d'entrée **44.** La paroi du déflecteur **52** se prolonge vers le bas en regard de la pièce d'appui **16** pour former avec la pièce d'appui **16** une ouverture inférieure annulaire **54** d'accès au tronçon d'entrée **44.** Elle se prolonge également vers le haut en regard de la jupe **40** du couvercle pour former avec la jupe **40** du couvercle des ouvertures supérieures **56** d'accès au tronçon d'entrée **44.** Les ouvertures supérieures **56** sont séparées par des pontets **58** de matière reliant le déflecteur **52** à la jupe **40** du couvercle, mais la section globale efficace des ouvertures supérieures **56** reste importante, supérieure à la moitié de la section efficace de l'ouverture inférieure **54.**

Comme illustré sur la figure, un rayon de lumière **88** pénétrant par l'ouverture inférieure **54** dans la direction générale de cette ouverture ressort par l'ouverture supérieure **56.** On s'assure ainsi que lorsqu'un jet d'eau sous pression est orienté pour pénétrer dans l'ouverture inférieure **54,** une partie importante du flux ressort sans être dévié par les ouvertures supérieures **56.** Le flux résiduel pénétrant dans le tronçon d'entrée **44** doit remplir la gorge **34** avant de pouvoir s'engouffrer dans le passage **46** de liaison avec le deuxième tronçon. Si le flux est encore assez puissant à ce niveau, il provoque un déplacement axial du joint **50** parallèlement à l'axe de rotation du palier, le joint venant ainsi fermer le passage **48** vers le troisième tronçon et vers le palier.

On a décrit ici un déflecteur **52** extérieur, situé radialement à l'extérieur du palier de butée **14,** pour protéger le labyrinthe **42** que l'on peut qualifier d'extérieur au sens où il se situe radialement à l'extérieur du logement **15** du palier de butée **14.** Le même principe est applicable pour protéger le passage **60** existant entre le couvercle **18** et la pièce d'appui **16** à la périphérie intérieure de la butée. En effet, ce passage **60,** également conformé en labyrinthe, peut également dans certaines utilisations être aspergé par des jets sous pression avec un risque de pénétration d'eau à l'intérieur du logement **15** par un tronçon d'entrée **62** situé radialement à l'intérieur du logement **15,** c'est-à-dire entre le logement **15** et l'axe de rotation **100.** On prévoit donc un déflecteur intérieur **64** relié au couvercle **18** par des pontets **55** disposé en regard de ce tronçon d'entrée de manière à former deux ouvertures inférieure **66** et supérieure **68** constituant deux voies de passage depuis l'extérieur dans le tronçon d'entrée **62.** L'ouverture supérieure **68** est située dans le prolongement de l'ouverture inférieure **66,** au sens où il est possible de tracer un rayon lumineux **70** pénétrant par l'ouverture inférieure **66** et ressortant par l'ouverture supérieure 68 sans être dévié et sans pénétrer dans le tronçon d'entrée **62.**

Naturellement diverses variantes sont possibles. Le déflecteur peut être rapporté sur le couvercle ou sur la pièce d'appui. Il peut également être partie intégrante de la pièce d'appui.

## Revendications

1. Dispositif de butée de suspension (10) pour une jambe de suspension d'un véhicule, la jambe étant pourvue d'un ressort à boudin, le dispositif comportant :
- un palier de butée (14) définissant un axe de rotation (100) du dispositif et pourvu d'une rondelle métallique inférieure (20) tournant par rapport à une rondelle métallique supérieure (22) ;
- une pièce d'appui (16) en matière synthétique pour transmettre à la rondelle inférieure (20) des efforts exercés par le ressort (12), la pièce d'appui (16) comportant une zone d'appui de la rondelle inférieure ; et
- un couvercle (18) recouvrant la rondelle supérieure (22) et délimitant avec la pièce d'appui (16) un logement (15) pour le palier, le couvercle (18) délimitant avec la pièce d'appui (16) un labyrinthe annulaire (42), reliant le logement à l'extérieur,
**caractérisé en ce que** le dispositif comporte un déflecteur annulaire (52) délimitant avec le couvercle au moins une ouverture supérieure (56) et avec la pièce d'appui (16) au moins une ouverture inférieure (54), les ouvertures supérieure et inférieure constituant des voies d'entrées supérieure et inférieure depuis l'extérieur dans un même tronçon d'entrée (44) du labyrinthe.

2. Dispositif selon la revendication 1, **caractérisé en ce que** le déflecteur est disposé de telle manière qu'il soit possible de faire pénétrer un rayon lumineux par l'ouverture inférieure (58) qui sorte par l'ouverture supérieure (56) sans pénétrer dans le tronçon d'entrée (44) du labyrinthe.

3. Dispositif selon la revendication 1 ou la revendication 2, **caractérisé en ce que** le labyrinthe (42) comporte en outre au moins un deuxième tronçon reliant le tronçon d'entrée (44) au palier (14).

4. Dispositif de butée selon la revendication 3, **caractérisé en ce que** le tronçon d'entrée (44) dans le labyrinthe s'étend depuis le déflecteur (52) radialement vers l'axe de rotation (100).

5. Dispositif selon la revendication 4, **caractérisé en ce que** le tronçon d'entrée (44) est relié à un deuxième tronçon du labyrinthe par une ouverture annulaire axiale (46), le deuxième tronçon du labyrinthe reliant le tronçon d'entrée (44) au palier (14).

6. Dispositif selon la revendication 5, **caractérisé en ce que** le tronçon d'entrée (44) s'étend radialement vers l'axe de rotation (100) jusqu'à une gorge annulaire (34), l'ouverture annulaire axiale (46) reliant le tronçon d'entrée au deuxième tronçon étant située radialement à l'extérieur de la gorge annulaire (34).

7. Dispositif selon l'une quelconque des revendications précédentes, **caractérisé en ce que** le dispositif comporte en outre un joint d'étanchéité (50) par contact glissant disposé dans le labyrinthe.

8. Dispositif selon la revendication 7 et l'une au moins des revendications 3 à 5, **caractérisé en ce que** le joint d'étanchéité (50) est disposé dans le deuxième tronçon.

9. Dispositif selon l'une quelconque des revendications 7 ou 8, **caractérisé en ce que** le joint d'étanchéité (50) est apte à glisser sur une surface de glissement de la pièce d'appui (16) et sur une surface de glissement du couvercle (18).

10. Dispositif selon l'une quelconque des revendications précédentes, **caractérisé en ce que** le déflecteur (52) fait partie intégrante du couvercle (18).

11. Dispositif selon l'une quelconque des revendications 1 à 9, **caractérisé en ce que** le déflecteur (52) fait partie intégrante de la pièce d'appui (16).

12. Dispositif selon l'une quelconque des revendications 1 à 9, **caractérisé en ce que** le déflecteur (52) est rapporté sur le couvercle (18) ou la pièce d'appui (16).

13. Dispositif selon l'une quelconque des revendications précédentes, **caractérisé en ce que** le tronçon d'entrée (44) du labyrinthe est disposé radialement à l'extérieur du logement (15).

14. Dispositif selon l'une quelconque des revendications 1 à 12, **caractérisé en ce que** le tronçon d'entrée (62) du labyrinthe est disposé radialement à l'intérieur du logement (15).

15. Méthode pour réduire ou empêcher une injection d'eau dans un dispositif de butée de suspension (10), consistant à prévoir deux ouvertures supérieure (56) et inférieure (54) reliant en parallèle à l'extérieur un tronçon d'entrée (44) dans un labyrinthe (42) situé entre une pièce d'appui inférieure (16) et un couvercle (18) de logement d'un palier (14) du dispositif de butée de suspension (10).
